# EUROPEAN PATENT APPLICATION

(11) **EP 2 493 155 A1**
(43) Date of publication of application: **29.08.2012**
(21) Application number: 11169090.5
(22) Date of filing: 08.06.2011
(51) Int. Cl.: H04M 1/2745, H04M 1/57, H04M 3/42

(54) **Apparatus, and associated method, for facilitating screening of a terminating communication**

(30) Priority: 25.02.2011 US 35697
(71) Applicant: Research In Motion Limited, Waterloo, ON N2L 3W8 (CA)
(72) Inventor: Prabu, Ganesh J., Irving, TX Texas 75039 (US)
(74) Representative: Noble, Nicholas

(57) **Abstract**

An apparatus, and an associated method, facilitates operation of a telephonic device at which a voice call or other communication is to be terminated. When the terminating communication is detected, an attempt is made to determine the name identity of the originator of the communication. If the identity cannot be ascertained, a request is made for additional information to be sent. The additional information includes, for instance, voice data entered by the originator that identifies the originator by name. The additional information is returned to the terminating device and the additional information is displayed, facilitating selection of whether to accept the terminating communication.

## Description

The present disclosure relates generally to a manner by which to provide calling-party information to a recipient of a telephone call, or other terminating communication. More particularly, the present disclosure relates to an apparatus, and an associated method, by which to obtain the calling-party information from the calling party and displaying the calling-party information, once obtained.

The recipient of the terminating communication is made aware of the identity of, or other information related to, the terminating communication prior to accepting the terminating communication. The recipient is able to screen the terminating communication even if the calling party is not listed in the contact list of the recipient.

### Background

Telephonic communications are a part of everyday life. Through such telephonic communications, parties are able to communicate by way of a network that supports telephonic communications even though the parties are separated by large distances.

Telephonic networks have, for many years, provided for wire line, i.e., fixed, connections extending to the respective telephonic devices of the parties, typically by way of a central switching office or other switching center.

Technological advancements have provided for development and deployment of additional communication systems as well as improvements to existing communication systems. Radio communication systems, for instance, have been developed and deployed and provide for telephonic communications with wireless devices forming telephonic stations that do not require the fixed connections needed of telephonic devices in conventional, wire line telephonic networks. A cellular communication system is an exemplary, radio communication system whose development and deployment has been made possible as a result of technological advancements.

Network infrastructures of cellular communication systems encompass significant portions of the populated areas of the world. When a wireless device is positioned at a location within the geographic area encompassed by the network infrastructure of a cellular communication system, telephonic communications are permitted between, and with, the wireless device.

While early-generation, cellular communication systems generally provided for voice communications and only limited data communication services, successor-generation systems provide for increasingly data-intensive data communication services. Communication services provided in a cellular communication system as well as, sometimes also in wire line communication systems, utilize digital communication techniques. Digital communication techniques provide for improved bandwidth performance. That is to say, use of digital communication techniques permits communication of an increased amount of information for a given allocation of bandwidth by as the use of digital communication techniques permits more efficient utilization of the bandwidth allocated for communications.

A call is placed by a call originator, at the calling party, i.e., the originating device. The call is routed by way of the network to a recipient at a receiving party, i.e., the terminating device. Call signaling is performed to set-up the communication parameters and allocations needed to complete the call or other communication, i.e., terminate the communication at the receiving party. The call signaling, for instance, provides for the formation of a call connection or communication channel to provide for the communication of information pursuant to the call. Call signaling in a cellular, or other radio, communication system provides, e.g., for the allocation of a channel, howsoever defined, upon which to communicate the information of the call.

Amongst the information that is sometimes provided during the call signaling pursuant to call set-up is a numeric identifier that identifies the calling party. The identifier comprises, for instance, a telephone number of the calling party that uniquely identifies the calling party. The terminating device at which the call is terminated sometimes includes a display screen that displays the numeric identifier of the calling party when the call is placed to the terminating device. The numeric identifier, however, does not provide for identification of the calling party unless the recipient is able to associate the numeric identifier with the calling party. That is to say, recipient is able to associate the numeric identifier with the calling party only if the recipient knows the numeric identifier, e.g., the telephone number, of the calling party.

Wireless, and other, devices sometimes include a contact list or directory that indexes numeric identifiers, such as telephone numbers, with associated name identifications. Some of such devices provide for access to the contact list during call set-up procedures. The numeric identifier of the originating party is used to identify the name of the originating party. However, if the contact list does not contain the information, identification of the originating party by name cannot be ascertained.

An improved manner of calling party identification is therefore required.

It is in light of this background information related to communications devices that the significant improvements of the present disclosure have evolved.

### Brief Description of the Drawings

Figure 1 illustrates a functional block diagram of a radio communication system in which an implementation of the present disclosure is embodied.

Figure 2 illustrates a process diagram representative of the process of operation of an implementation of the present disclosure.

Figure 3 illustrates a method flow diagram representative of the method of operation of an implementation of the present disclosure.

### Detailed Description

The present disclosure, accordingly, advantageously provides an apparatus, and an associated method, by which to provide calling-party information to a recipient of a telephone call or other terminating communication.

Through operation of an implementation of the present disclosure, a manner is provided by which to obtain the calling-party information from the calling party and displaying the calling-party information, once obtained.

In one aspect of the present disclosure, the recipient of the terminating communication is made aware of the identity of, or other information related to, the terminating communication prior to accepting the terminating communication. The recipient is able to screen the terminating communication even if the calling party is not listed in the contact list.

In another aspect of the present disclosure, a detector, embodied at a device that receives a terminating communication, detects delivery of information associated with the terminating communication. For instance, when a telephone call is to be terminated at the device, the detector detects call signaling related to the call setup of the terminating communication. The detector, for instance, detects signals sent by the network that are associated with a call-connection request.

In another aspect of the present disclosure, a determiner is provided to attempt to determine the name identity, or other extra-telephonic-numerical indicator, of the terminating communication. The determiner, for instance, utilizes a numeric identifier that is included in the information received at the device that receives the terminating communication request. The determiner, for instance, accesses a contact list, such as a telephone directory, embodied at the terminating device, or elsewhere and otherwise accessible by the determiner. The determiner attempts to determine the identity of the originator at the originating party. If the identity, e.g., name, of the originating party is determinable, then the determiner identifies the originating party and makes the determined identity available to the recipient at the receiving party.

In another aspect of the present disclosure, if an attempt to determine the identity of the originator is unsuccessful, then the determiner provides an indication that the attempt to determine the identity of the originator is unsuccessful.

In another aspect of the present disclosure, an identity requestor operates to request information of the originating party. The information, when returned to the receiving party permits the recipient to make knowing selection of whether to accept the terminating communication. The identity request is made, for instance, responsive to an indication provided by the determiner that the attempt to determine the identity of the originating party is unsuccessful. The request for the additional information comprises, for instance, a request for information that identifies the name identity of the originator associated with the numeric identifier of the originating party.

In another aspect of the present disclosure, a detector is embodied at the, or in connectivity with, the originating party. The detector detects the request for the additional information regarding the originating party. The request for the additional information comprises, for instance, the identity of the originating party or the subject matter intended of the terminating communication.

In another aspect of the present disclosure, a calling party information provider obtains calling party information responsive to detection of the request for the additional information. The additional information comprises, for instance, information that is aurally-provided by the originating party or comprises, for instance, textual information.

In another aspect of the present disclosure, the calling-party information, once obtained, is provided to the terminating device. The terminating device includes a detector that detects the calling-party information that is provided to the terminating device in response to the request for the information.

In another aspect of the present disclosure, the terminating device further includes an identifier that displays indication of the calling-party information provided to the terminating device in response to the request. The identifier displays the information in human-perceptible form to permit the recipient to view the calling-party information.

The recipient is able, responsive to reviewing the calling-party information, to elect whether to accept the terminating communication. When the terminating communication comprises a terminating telephone call, the recipient elects whether to accept the terminating call or to have the terminating call routed to voicemail, or elsewhere.

Thereby, the recipient obtains information regarding the originating party to permit informed decision as to whether to accept a terminating communication.

In these and further aspects, therefore, an apparatus, and an associated method, is provided for a telephonic device configured to receive a terminating communication. An identity requestor is configured to request, responsive to the terminating that the terminating communication is of an unknown name identity, calling-party information that identifies the name identity of the terminating communication. An identifier is configured to display the calling-party information provided responsive to the request made by the identity requestor.

In these and further aspects, further apparatus, and an associated method, is provided for a telephonic communication device. A detector is configured to detect a terminating party request for calling-party information responsive to initiation, at the telephonic communication device, of a terminating communication. A calling party information provider is configured to provide the calling party information responsive to detection of the terminating-party request.

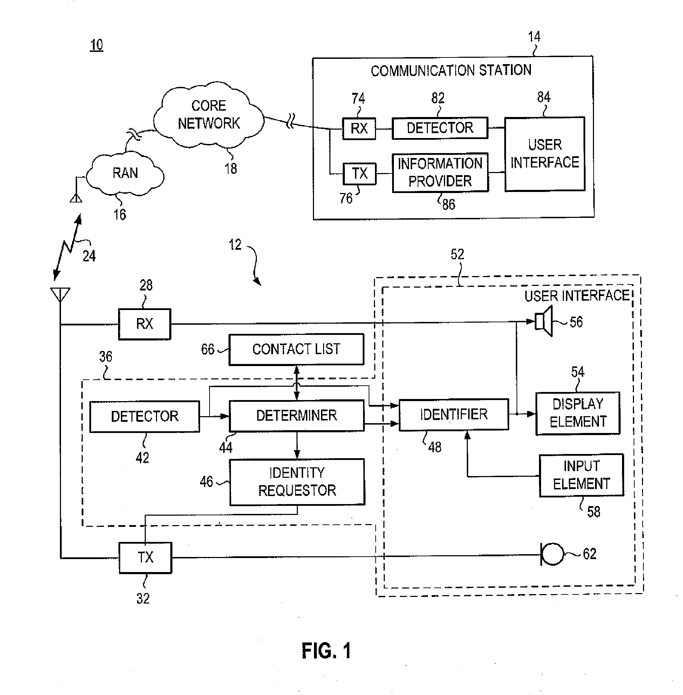

Turning first to Figure 1, communication system, shown generally at 10, provides for communications with, and between, communication stations of which the wireless device 12 and the communication device 14 are representative. The communication system 10, in the exemplary implementation, comprises a radio communication system, here a cellular communication system operable in general conformity with the operating specification of an appropriate cellular communication standard. While the following description shall describe exemplary operation with respect to the exemplary implementation in which the communication system comprises a cellular radio communication system, in other implementations, the communication system 10 is configured in other manners. Operation of the communication system constructed in an other manner is analogous to provide for communications between sets of communication devices, such as the communication devices 12 and 14.

The communication system 10 here includes a network part including a radio access network (RAN) 16 and a core network (CN) 18. The communication device 14 is placed in communication connectivity with the core network 18. The communication device 14 comprises, e.g., a fixed, telephonic station, a wireless device, or other communication device capable of telephonic communication pursuant to a voice or data service.

Communication connectivity is provided between the network part of the communication system and the wireless device 12 by way of channels 24 defined upon a radio air interface formed between the network and the wireless device. A communication path is formed between the communication device 14 and the wireless device 12 by way of the network parts 16 and 18 and radio channels defined upon the radio air interface. Two-way communications, such as communications pursuant to a voice call, are provided to permit the communication of information by the communication 14 to the wireless device 12 and by the wireless device 12 to the communication device 14.

The wireless device 12 includes transceiver circuitry, here represented by a receive (Rx) part 28 and a transmit (Tx) part 32. The receive part 28 operates to receive information sent to the wireless device, and the transmit part 32 operates to transmit information sourced at the wireless device 12 for communication elsewhere, such as to the communication device 14.

The communication device 14, e.g., initiates a communication for termination at the wireless device 12. When the communication comprises a voice telephonic communication, call initiation at the communication device 14 is commenced through entry of dialing digits associated with the wireless device 12. When the entered dialing digits are communicated to the network part, call set-up signaling is generated to set up a call connection between the communication device 14, the originating device, and the wireless device 12, the terminating device. Pursuant to the call set-up procedures, an alert is generated at the wireless device to alert the recipient of the terminating call.

As mentioned preciously, an indication of the originating party, such as the telephonic numeric identifier of the originating party, provided to the terminating party pursuant to the call set-up signaling, is conventionally displayed at a display element of the wireless device. And, if, the telephonic numeric identifier is associated, in a contact list, with the name identity of the calling party, the name identity is also displayable at the display element.

As also noted previously, however, often times, the telephonic identifier is not in the contact list maintained at the wireless device, and identifying information, other than the telephonic identifier, is not displayed at the display element. A numeric identifier might well provide little useful information to a recipient of the terminating call, and the recipient is then compelled to make a decision whether to accept the terminating communication without knowledge of the originating party or of the substance of the terminating communication.

The wireless device 12 further includes an apparatus 36 of an implementation of the present disclosure. The apparatus 36 is functionally represented, formed of functional elements, implementable in any desired manner, including, e.g., hardware implementations, firmware implementations, algorithms executable by processing circuitry, and combinations thereof. Additionally, while in the exemplary implementation, the elements of the apparatus 36 are embodied at the device 12, is other implementations, the elements are distributed and are embodied at more than one physical location.

The apparatus 36 here includes a detector 42, a determiner 44, an identity requestor 46, and an identifier 48. The identifier 48 forms part of a user interface 52, here including a visual display element 54, an acoustic transducer forming a speaker 56, an input keyboard 58, and an acoustic transducer forming a microphone 62.

The device 12 is operable, amongst other things, to receive a terminating communication, such as a terminating voice call, at the device. The terminating communication is alerted to the receiving party who operates the device 12, and the receiving party elects whether to accept the terminating communication or, e.g., have the terminating communication be routed to a voice mail location. The apparatus 36 operates to facilitate selection by the receiving party of whether to accept the terminating communication.

When signaling related to the terminating communication is received at the receive part 28 of the transceiver circuitry of the device 12, the detector 42 detects the delivery of the terminating communication including, for instance, a numeric identifier, e.g., phone number, of the originating device.

Indications of the detection made by the detector, including the telephone number or other identifying information associated with the originating device, are provided to the determiner 44. The determiner 44 operates to attempt to determine identifying information associated with the originating device that originates the terminating communication. The determiner, for instance utilizes the numeric identifier of the originating device detected by the detector to access a contact list 66, or other directory. When the contact list or other directory is accessed, the determiner determines whether a name is associated with the numeric identifier. If so, the name is retrieved, and the retrieved, name identity is provided to the identifier 48, which causes display of the name identity at the visual display 54 or otherwise causes the information to be placed in human perceptible form.

If, conversely, the determiner 44 is unable to ascertain the name identity associated with the originating device, an indication is of the failure to obtain the name identity is provided to the identity requestor 46. The identity requestor 46 generates a request for information related to the originating party. The request is caused to be transmitted by the transmit part 32 of the device 12 for delivery to the originating device, here the communication device 14.

Responsive to the request generated at the device 12, information is returned to the device. The information comprises, e.g., aural information or textual information.

When received by the receive part, the detector 42 detects the return of the additional information, and the information is provided to the identifier 48, which causes the information to be displayed at the visual display 54. The information returned to the device 12 responsive to the request comprises, for instance, name information provided by the originator of the communication or subject-matter information related to the intended subject of the terminating communication. Thereby, the information needed to make a decision whether to accept the terminating communication is available, in human perceptible form.

In the exemplary implementation, the communication device 14 includes further apparatus 72 of an implementation of the present disclosure. The apparatus 72 is functionally represented, implementable in any desired manner, including, for instance, by hardware elements, firmware elements, by algorithms executable by processing circuitry, and combinations thereof. The communication device is further shown to include a receive part 74 and a transmit part 76. The receive and transmit part 74 and 76 comprise a radio transceiver when the communication device 14 is implemented as a cellular, or other radio, device. The apparatus 72 includes a detector 82, user interface 84, and a calling party information provider 86.

The detector 82 is configured to detect reception by the receive part 74 of the request for calling-party information sent by the terminating device, here the wireless device 12. Responsive to detection of the request, an indication of the request is provided to the user interface 84, and the originator of the communication is prompted to provide the additional information. The additional information comprises, for instance, an aurally-entered indication of the information or entry of textual information forming the information.

Once entered, the calling party information provider 86 forms a response that is transmitted by the transmit part for return to the device 12.

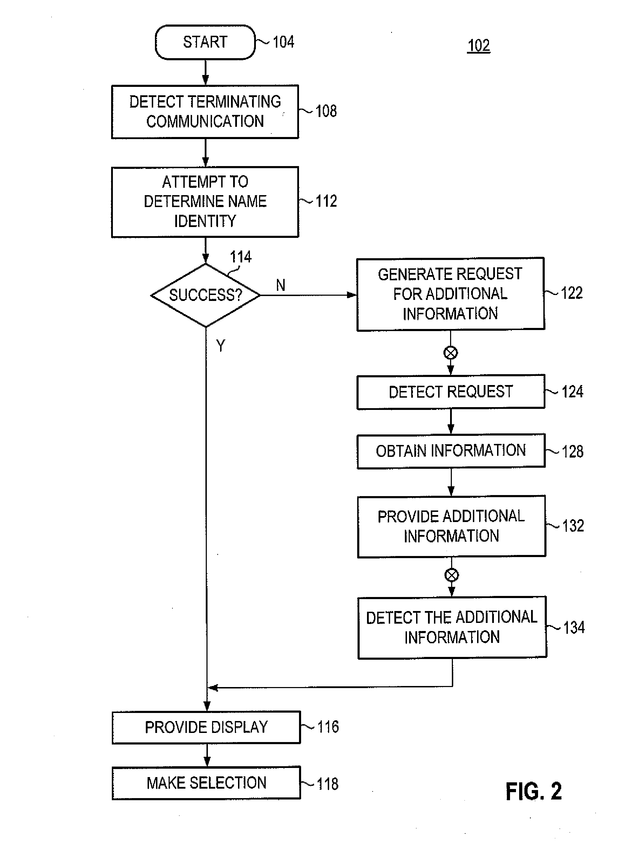

Turning next to Figure 2, a process, shown generally at 102 provides information to a user of a communication device, such as a wireless device, at which a telephone call or other communication is to be terminated.

Subsequent to entry into the process, indicated by the start block 104, detection is made, indicated by the block 108, as to whether a terminating communication with the communication device has been requested. Upon such detection, an attempt is made, indicated by the block 112, to determine the identity of the originator of the terminating communication. A numerical identifier, such as a telephone number, of the originating party, is used to attempt to determine the name identity, or other information, associated with the originator of the communication.

Then, and as indicated by the decision block 114, a determination is made as to whether the determination of the identity of the originator has been ascertained. If so, the yes branch is taken to the block 116, and the ascertained information is provided for display at a device that presents the information in human-perceptible form. And, as indicated by the block 118, selection of whether to accept the terminating communication is made.

Conversely, if the attempt to determine the name identity of the originator of the terminating communication is unsuccessful, the no branch is taken from the decision block 114 to the block 122. At the block 122, a request for additional information related to the originator is generated and sent for return to the originating party.

At the originating party, and as indicated by the block 124, the request is detected. Then, and as indicated by the block 128, the additional information related to the originator is obtained. The additional information comprises, for instance, voice information or textual information either to identifier the name of the originator or other information associated with the terminating communication, such as the subject matter of the terminating communication. Once obtained, the additional information is provided, indicated by the block 132, to the terminating device. The operations 124, 128, and 132 are carried out, for instance, at the originating station, while the other functions are carried out at the terminating station.

The additional information provided by the originator is delivered to the terminating station, which, as indicated by the block 134, detects the additional information. A path is taken from the block 134 to the block 116, which causes display of the additional information and permits subsequent selection of whether to accept the terminating communication.

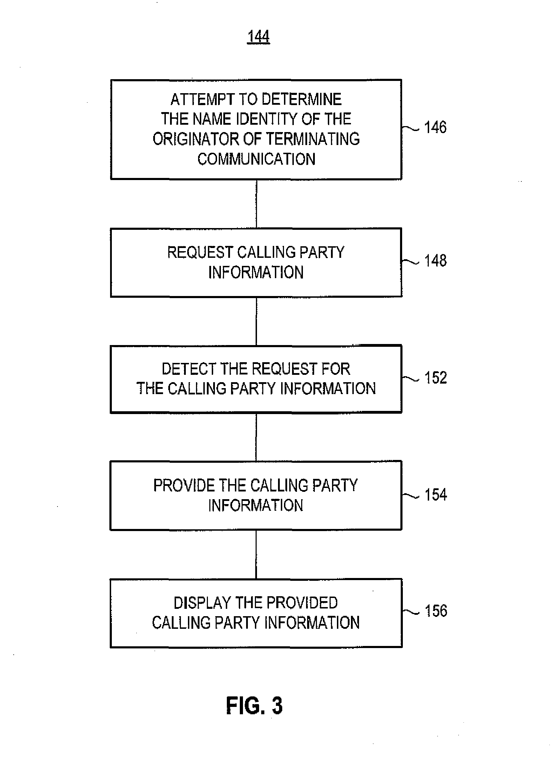

Figure 3 illustrates a method flow diagram 144 representative of the method of operation of an implementation of the present disclosure. The method facilitates operation of a telephonic device configured to receive a terminating communication. First, and as indicated by the block 146, an attempt is made to determine the name identity of a terminating communication. Then, and as indicated by the block 148, if the attempt is unsuccessful, calling-party information is requested to identify the name identity of the originator.

The request is sent and, as indicated by the block 152, the request is detected. Then, and as indicated by the block 154, the additional information is provided and returned to the telephonic device. And, as indicated by the block 156, the calling party information is displayed.

Thereby, information is provided and displayed to permit better selection of whether to accept a terminating communication.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for a telephonic device configured to receive a terminating communication, said apparatus comprising:
an identity requestor configured to request, responsive to determination that the terminating communication is of an unknown name identity, calling-party information identifying the terminating communication;
an identifier configured to cause display the calling-party information provided responsive to the request made by said identity requestor.

2. The apparatus of claim 1 further comprising a detector configured to detect the terminating communication.

3. The apparatus of claim 1 further comprising a determiner configured to attempt to determine the name identity of the terminating communication.

4. The apparatus of claim 3 wherein said identity requestor is configured to request the calling-party information responsive to indication that said determiner is unable to determine the name identity of the terminating communication.

5. The apparatus of claim 1 wherein the request made by said requestor comprises a calling-party-terminated request.

6. The apparatus of claim 1 wherein the calling-party information displayed by said identifier comprises voice information.

7. The apparatus of claim 6 wherein said identifier comprises an aural transducer configured to transduce the voice information, provided responsive to the request, in aural form.

8. The apparatus of claim 1 wherein the calling-party information displayed by said identifier comprises textual information.

9. The apparatus of claim 8 wherein said identifier comprises a visual transducer configured to transduce the textual information, provided responsive to the request, in visual form.

10. The apparatus of claim 8 wherein said identifier comprises a text-to-speech transducer configured to transduce the textual information, provided responsive to the request, in aural form.

11. The apparatus of claim 1 wherein the calling-party information provided responsive to the request and displayed by said identifier comprises terminating-communication, subject-matter information.

12. The apparatus of claim 1 further comprising a detector configured to detect the calling-party information provided responsive to the request made by said identity requestor.

13. A method for facilitating operation of a telephonic device configured to receive a terminating communication, said method comprising:
requesting calling-party information identifying a name identity of the terminating communication responsive to determination that the terminating communication is of unknown name identity; and
displaying the calling-party information provided responsive to request made during said requesting.

14. The method of claim 13 further comprising, prior to said requesting, attempting to determine the name identity of the terminating communication.

15. The method of claim 13 further comprising detecting the calling-party information provided responsive to the request made during said requesting.
